# FASCICULE DE BREVET EUROPEEN

(11) **EP 3 409 567 B1**
(45) Date de publication et mention de la délivrance du brevet: **29.01.2020**
(21) Numéro de dépôt: 18167297.3
(22) Date de dépôt: 13.04.2018
(51) Int. Cl.: B62D 25/14, B62D 65/02, B62D 65/14, B60R 13/02, B62D 25/08, B60R 21/045

(54) **DISPOSITIF DE SUPPORT POUR UNE PLANCHE DE BORD D'UN VÉHICULE AUTOMOBILE**
HALTEVORRICHTUNG FÜR ARMATURENBRETT EINES KRAFTFAHRZEUGS
SUPPORT DEVICE FOR A DASHBOARD OF A MOTOR VEHICLE

(30) Priorité: 31.05.2017 FR 1754796
(43) Date de publication de la demande: 05.12.2018
(73) Titulaire: PSA Automobiles SA, 78300 Poissy (FR)
(72) Inventeur: MATUSIK, Jacques, 78180 Montigny le Bretonneux (FR); MARTINET, Gilles, 70400 Mignavillers (FR)
(74) Mandataire: Fernandez, Francis Lionel

(56) Documents cités:
- EP-A1- 1 652 760
- EP-A2- 1 209 066
- US-A- 5 273 314
- US-A- 5 865 468
- US-A1- 2005 194 773

## Description

La présente invention concerne un dispositif de support pour la fixation de la planche de bord d'un véhicule automobile. Il est connu de fixer la planche de bord d'un véhicule automobile à la caisse en positionnant la planche entre les deux pieds latéraux avant dudit véhicule et sur la traverse inférieure de baie s'étendant sous le pare-brise.

Ainsi, on prévoit de fixer ladite planche de bord sur les pieds avant et quand celle-ci présente une côte large et a besoin de soutien en ligne du pare-brise, on prévoit également des dispositifs de support de la planche de bord sur la traverse inférieure de baie tels que des pions prévus sur la planche de bord et insérés dans des trous ménagés en correspondance dans la traverse. On a proposé également dans EP 1 652 760 de ménager des entretoises entre la traverse et la planche de bord.

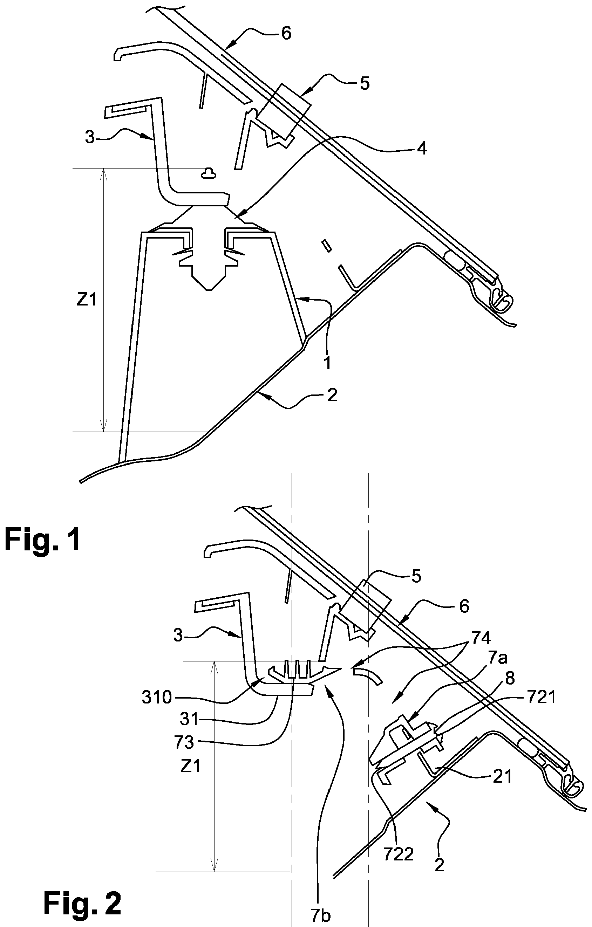

Dans le cas d'une planche de bord de côte dite large, on prévoit donc plusieurs dispositifs de support de la planche de bord en ligne de pare-brise. Un tel support est notamment décrit à la figure 1. Ces dispositifs de support secondaires présentent néanmoins plusieurs inconvénients.

Tout d'abord, ces dispositifs de support forment un obstacle au choc piéton car ils forment une entretoise entre la planche de bord 3 impactée par le critère choc piéton et la partie 2 de la structure de caisse du véhicule. Comme on peut le voir sur la figure 1, un support 1 en tôle ou en matière synthétique est fixé entre la traverse inférieure de baie 2 et l'extrémité de la planche de bord 3. Ce support 1 présente un trou dans lequel est engageable un pion de centrage 4 prévu sur la planche de bord 3. La côte Z1 est trop élevée pour absorber la dissipation d'énergie due au choc piéton.

De plus, lors du montage, le support 1 est nécessairement déjà fixé sur la structure de caisse avant 2 et ce, avant la planche de bord 3. Il s'ensuit que, lors de la mise en place de la planche de bord 3 surviennent des difficultés de montage pouvant conduire à une non-conformité de la mise en place de la planche de bord 3 et/ou à une perte de temps de montage. Un mauvais montage peut alors conduire à un défaut de plaquage du joint 5 de la planche de bord 3 contre le pare-brise 6, générateur de bruits parasites.

L'invention a donc pour but principal de proposer un dispositif de support entre un élément de structure de véhicule automobile tel qu'une traverse inférieure de baie et un élément d'équipement intérieur tel que la planche de bord dont la mise en place est aisée et sûre.

Un but secondaire à la base de l'invention est de proposer un dispositif de support, en particulier, entre la traverse inférieure de baie et la planche de bord, permettant de répondre aux critères de choc piéton.

A cet effet, l'invention a pour objet un véhicule automobile comprenant un élément d'équipement intérieur de véhicule et un élément de structure de véhicule reliés l'un à l'autre par au moins un dispositif de support, le dispositif de support étant constitué d'une entretoise dont une extrémité présente deux pattes parallèles de pré-maintien, l'élément de structure comportant une partie de fixation sur le bord de laquelle l'extrémité de pré-maintien de l'entretoise est montée à chevauchement tandis que l'extrémité opposée de l'entretoise présente des moyens de retenue coopérant avec des moyens de retenue complémentaires ménagés sur l'élément d'équipement intérieur. Un tel dispositif de support, décrivant les caractéristiques du préambule de la revendication 1, sont connus des documents US 5273314A et US2005194773A1. Ces documents divulguent également le préambule de la revendication indépendante 6, à savoir un dispositif de support pour relier un élément d'équipement intérieur et un élément de structure d'un véhicule automobile.

Selon l'invention l'entretoise de support est constituée d'un corps principal allongé et plan entre ces deux extrémités, l'une des extrémités présentant deux pattes en saillie parallèles l'une à l'autre et l'autre extrémité présentant une partie plus large que le corps principal formant ainsi une extrémité en forme de T.

De manière très avantageuse, l'extrémité de pré-maintien de l'entretoise peut ainsi être mise en place sur le bord d'une partie de fixation de l'élément de structure, notamment par un simple coulissement latéral de l'entretoise permettant d'engager l'extrémité de pré-maintien à chevauchement sur ledit bord. Ceci permet la mise en place de l'entretoise entre des éléments qui peuvent être ainsi déjà positionnés l'un par rapport à l'autre.

Selon une forme préférée de l'invention, l'élément de structure est constitué par une traverse de baie inférieure et l'élément d'équipement intérieur est constitué d'une planche de bord, ainsi le dispositif de support entre la traverse inférieure de baie et la planche de bord peut avantageusement être mis en place une fois la planche de bord déjà positionnée entre les pieds avant de la caisse, en positionnant le dispositif entre les deux éléments et en engageant par coulissement l'extrémité de pré-maintien sur la partie de fixation de la traverse inférieure de baie, constitué par exemple d'une plaque en L fixée sur la traverse.

De préférence, les moyens de retenue ménagés sur la planche de bord sont constitués d'une patte s'étendant en saillie de la face inférieure de la planche de bord et ménageant entre elle et la planche de bord, un logement de réception dans lequel s'engagent les moyens de retenue ménagés à l'extrémité de l'entretoise.

De plus, cet engagement dans le logement de réception s'effectue lors du coulissement latéral du dispositif entre les deux éléments. Ainsi, l'extrémité de retenue de l'entretoise est conformée pour permettre un engagement facilité dans le logement de réception de réception de la planche de bord, par exemple les bords latéraux de l'extrémité sont chanfreinés, pour faciliter le coulissement desdits moyens dans le logement de réception.

Ainsi, on met en place très facilement l'entretoise selon l'invention par coulissement des pattes de pré-maintien de part et d'autre de la partie de fixation de la traverse tandis que l'extrémité opposée s'engage également lors du coulissement dans le logement de réception.

En variante, les moyens de retenue ménagés sur la planche de bord peuvent être constitués d'une plaque de fixation sur laquelle peut être fixée, par exemple par vissage, l'extrémité de retenue de l'entretoise.

Selon un mode de réalisation, l'extrémité de pré-maintien de l'entretoise comporte en outre un moyen de fixation permettant de fixer l'entretoise sur la partie de fixation de la traverse une fois celle-ci correctement positionnée entre la traverse et la planche de bord. Ce moyen de fixation est avantageusement constitué d'une vis, engageable dans des alésages filetés ménagés dans chacune des pattes de pré-maintien.

Selon une variante de réalisation préférée, le dispositif de support présente des zones susceptibles d'être cassées lors d'un choc tête piéton. Cette cassure du dispositif de support permet de libérer l'espace entre la planche de bord et la traverse inférieure de baie de tout obstacle, de dissiper en partie l'énergie liée au choc et de protéger de l'agressivité éventuelle de la plaque de fixation, généralement en tôle, soudé sur la traverse inférieure de baie.

Ainsi, de manière avantageuse, le corps principal de l'entretoise présente au moins une lumière, de sorte que sous l'effet d'un choc extérieur, la lumière permet au dispositif de support d'absorber une partie de l'énergie liée au choc jusqu'à la rupture totale afin de libérer l'espace entre la planche de bord et la traverse inférieure de baie.

L'invention concerne également un dispositif de support pour relier un élément d'équipement intérieur et un élément de structure d'un véhicule automobile, comprenant un corps principal dont une extrémité présente une forme en T et dont l'autre extrémité présente dans le prolongement du corps des pattes parallèles entre elles, chaque patte présentant un alésage traversant fileté, une vis de fixation étant engageable dans les deux alésages reliant les pattes. De préférence, l'engagement de la vis dans les alésages peut se faire de part et d'autre du dispositif ce qui permet une fixation depuis l'extérieur ou l'intérieur du véhicule.

L'invention a également pour objet un procédé de montage d'un dispositif de support selon deux modes. Le premier mode est un procédé de montage en usine : consistant après le montage de la planche de bord, à monter le dispositif de support de planche de bord depuis l'extérieur, au niveau du compartiment moteur et avant le montage du pare-brise, en positionnant le dispositif à une position adjacente à la plaque de fixation prévue sur la traverse inférieure de baie puis en faisant coulisser latéralement le dispositif jusqu'à ce que les pattes de pré-maintien pourvues de la vis pré-montée se trouvent engagées de part et d'autre de la partie de fixation tandis que l'extrémité opposée de l'entretoise se positionne dans le logement de réception. On verrouille ensuite le dispositif en position par vissage.

Le second mode de montage consiste en après-vente, à effectuer l'opération de rechange du dispositif suivant deux options possibles. Première option, le pare-brise est cassé et donc retiré, on enlève le dispositif de support endommagé depuis l'extérieur véhicule, puis on pose un nouveau dispositif de support comme en usine, tel que décrit ci-dessus, et ensuite on pose un nouveau pare-brise.

En deuxième option, le pare-brise est intact et ne nécessite pas d'intervention, on retire alors la planche de bord puis le dispositif de support défectueux à l'aide d'un outil approprié et on met en place depuis l'intérieur un nouveau dispositif de support mais ne comportant pas la vis. Puis, on fixe le dispositif de support avec la vis obligatoirement vissée en sens inverse depuis l'intérieur du véhicule. On termine en remontant la planche de bord.

Ainsi, l'invention concerne également un procédé de réparation d'un véhicule comportant un dispositif de support, qui consiste à retirer la planche de bord puis le dispositif de support défectueux à l'aide d'un outil approprié, à mettre en place depuis l'intérieur du véhicule un nouveau dispositif de support, à fixer ensuite ledit dispositif par vissage depuis l'intérieur du véhicule et à remonter la planche de bord.

De manière avantageuse, le dispositif de support selon l'invention permet de réduire :
- les risques de défaut de plaquage entre la planche de bord et le pare-brise au niveau du joint ;
- les bruits parasites de la planche de bord lorsqu'elle est mal engagée avec un dispositif de support de l'état de la technique ;
- les bruits parasites du dispositif de support lui-même car celui-ci est vissé contrairement au dispositif précédent uniquement encliqueté.

De manière avantageuse, le dispositif de support selon l'invention permet de répondre à la demande de tenue vibratoire de la planche de bord tout en prenant en compte le critère essentiel du choc tête permettant ainsi à une caisse de véhicule automobile de répondre également aux critères sévères des tests du choc piéton.

On décrira maintenant l'invention plus en détail en référence au dessin dans lequel :
- La figure 1 représente une vue en coupe d'un dispositif de support entre une traverse inférieure de baie et une planche de bord selon l'état de la technique;
- La figure 2 représente une vue en coupe d'un dispositif de support entre une traverse inférieure de baie et une planche de bord selon l'invention ;
- Les figures 3a, 3b, 3c et 3d représentent respectivement une vue en perspective avant, arrière, de côté et du dessus d'un dispositif de support selon l'invention ;
- Les figures 4a, 4b, 4c et 4d représentent respectivement des étapes de montage du dispositif de support en première monte selon l'invention ;
- Les figures 5a, 5b, 5c et 5d représentent respectivement des étapes de montage du dispositif de support en réparation selon l'invention ;
- Les figures 6a, 6b, 6c et 6d représentent des vues en perspective avant de différentes étapes de montage du dispositif de support selon l'invention ; et
- La figure 7 représente une vue en perspective avant d'une caisse de véhicule lors du montage d'un dispositif de support selon l'invention.

A la figure 2 est visible le dispositif de support selon l'invention mis en place entre une planche de bord 3 et une traverse inférieure de baie 2.

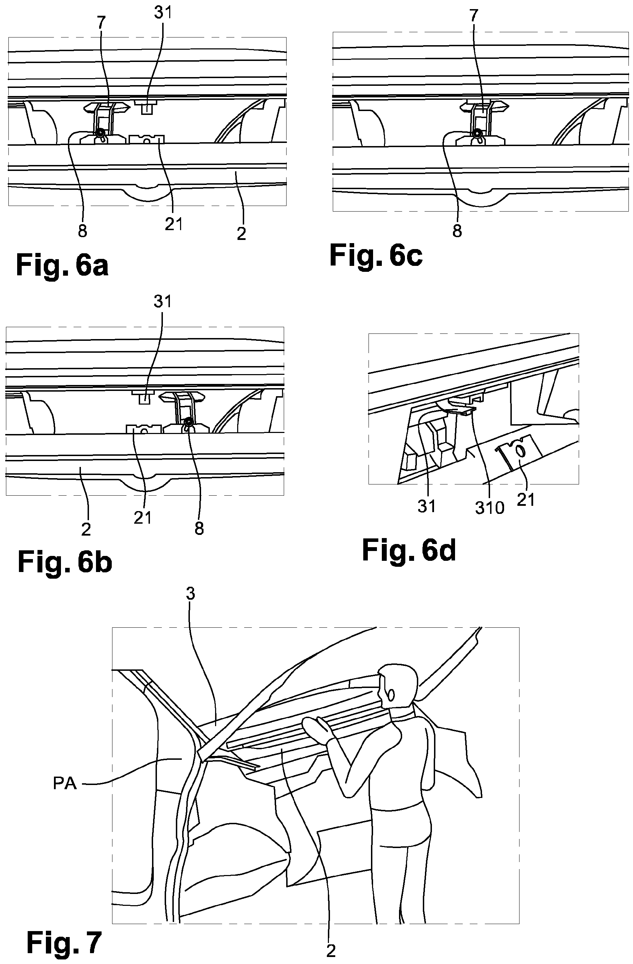

Le dispositif de support est constitué d'une entretoise 7. Cette entretoise 7 comprend un corps principal 71 dont une extrémité 7a présente deux pattes 72 s'étendant parallèles l'une à l'autre et formant une « pince » 7a de pré-maintien de l'entretoise 7 sur une partie de fixation 21 sous forme d'une plaque en L fixée sur la traverse inférieure de baie 2. L'extrémité 7a en forme de pince de l'entretoise 7 peut ainsi être montée à chevauchement sur le bord de la partie de fixation 21, cet engagement sur la partie de fixation 21 peut notamment se faire par un coulissement latéral de l'entretoise sur la partie de fixation 21 comme on peut le voir sur les figures 6a, 6b et 6c.

L'extrémité opposée 7b de l'entretoise 7 présente des moyens de retenue 7b qui sont complémentaires de moyens de retenue ménagés sur l'élément d'équipement intérieur. L'extrémité 7b est selon l'invention ménagée plus large que le corps principal 71 et confère une extrémité en forme de T à l'entretoise 7.

De préférence, les moyens de retenue 7b de l'entretoise 7 et les moyens de retenue 31 complémentaires ménagés sur la planche de bord 3 sont prévus pour coopérer les uns avec les autres également suite à un coulissement latéral de l'entretoise 7. De ce fait, les moyens de retenue 31, 310 sont ménagés sur la planche de bord à une position en regard de la plaque de fixation 21 ménagée sur la traverse inférieure de baie.

De manière classique, la traverse inférieure de baie 2 est positionnée au-dessous de l'extrémité de la planche de bord 3 (selon l'axe z du véhicule) mais décalée par rapport à celle-ci (selon l'axe x du véhicule) et le corps principal 71 de l'entretoise 7 présente une forme courbée permettant ainsi à l'extrémité 7b de se loger sous la planche de bord 2.

Ainsi, selon un mode de réalisation préféré, la planche de bord 3 présente une patte 31 ménagée en saillie depuis la face de la planche de bord 3 en regard de la traverse inférieure de baie 2. Cette patte 31 définit un logement de réception 310 formant les moyens de retenue complémentaires des moyens de retenue 73 ménagés à l'extrémité 7b de l'entretoise 7, comme on peut le voir sur la figure 6d.

De ce fait, l'extrémité 7b de l'entretoise 7 est conformée pour permettre d'engager les moyens de retenue 73 de l'entretoise 7 dans le logement de réception 310 prévu à cet effet par coulissement de ladite entretoise 7 (selon l'axe y du véhicule) les bords latéraux de l'extrémité 7b étant de préférence chanfreinés pour garantir un engagement par coulissement aisé.

Ainsi, on met en place une entretoise 7 soit à une position selon la figure 6a soit à une position selon la figure 6b puis on fait coulisser ladite entretoise 7 selon l'axe y du véhicule pour engager l'extrémité de pré-maintien 7a sur la partie de fixation 21 et les moyens de retenue 73 dans le logement de réception 310. Une fois bien positionnée, on fixe l'entretoise 7 en position par vissage de la vis 8 sur la plaque de fixation 21 qui présente un orifice traversé par ladite vis 8.

De préférence, chaque patte 72 de l'extrémité de pré-maintien 7a de l'entretoise présente un alésage fileté 721, 722 dans lequel est engagée la vis 8.

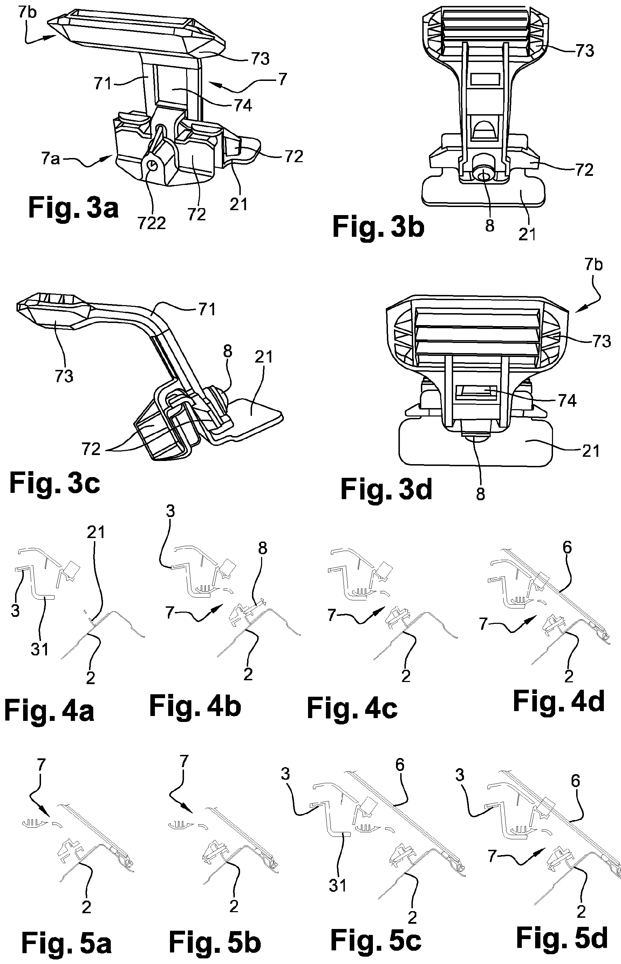

Ainsi que cela est visible sur la figure 7 et la figure 4a, la planche de bord 3 est montée entre les pieds avant PA de la structure de caisse et la mise en place des entretoises 7 peut être effectuée facilement par un opérateur depuis la partie avant de la caisse en engageant lesdites entretoises 7 par coulissement latéral entre la traverse inférieure de baie 2 et la planche de bord 3.

Le dispositif de support 7 offre donc la possibilité de se monter avant la planche de bord. En usine (cf. figures 4a à 4d) la planche de bord 3 est montée sans contrainte particulière puis le dispositif de support 7 est mis en place depuis l'extérieur du véhicule avant la pose du pare-brise (cf. figure 7).

Ainsi on met en place une entretoise 7 entre la planche de bord 3 et la traverse inférieure de baie 2, à proximité de la plaque de fixation 21 (cf. figures 6a ou 6b) puis on coulisse latéralement l'entretoise 7 de sorte que l'extrémité de pré-maintien 7a se loge sur la plaque de fixation 21 de la traverse inférieure de baie 2 et que l'extrémité opposée 7b s'engage dans le logement 310 formé par la patte 31 en saillie de la planche de bord 3 (cf. figures 4b, 6c). Puis on fixe en position l'entretoise 7 à l'aide de la vis 8 (cf figure 5c, 4c) engagée au travers de l'alésage fileté 721 dans l'orifice de la plaque de fixation 21 puis dans l'alésage fileté 722. On fixe ensuite le pare-brise 6 (cf figure 4d).

Selon une forme de réalisation préférée, l'entretoise 7 qui s'étend entre l'élément de structure 2 et l'élément d'équipement 3 est frangible sous l'effet d'un choc piéton permettant ainsi une dissipation d'énergie supplémentaire. Le corps 71 comporte à cet effet entre les deux extrémités 7a, 7b, deux lumières 74 fragilisant le corps principal 71 qui, sous l'effet d'un choc sur la partie haute peut alors se fracturer.

Une fois, le dispositif de support 7 selon l'invention cassé suite à un choc, il est alors possible de mettre en place une nouvelle entretoise 7 en remplacement. Ainsi, on retire la planche de bord 3, on met en place la nouvelle entretoise 7 sur le support de fixation 21 (cf. fig. 5a). On fixe l'entretoise 7 sur la plaque de fixation 21 par engagement de la vis 8 dans l'alésage fileté 722, l'orifice de la plaque de fixation 21 puis l'alésage fileté 722 (voir la fig. 5b) et on remet la planche de bord 3, l'extrémité 7b s'engageant dans le logement 310 (cf. fig. 5c et 5d).

Ainsi, en après-vente, l'opération de rechange peut se faire soit depuis l'intérieur après dépose de la planche de bord ou soit par l'extérieur si le pare-brise doit être également changé.

Ainsi, l'invention propose de réaliser un dispositif de support sous forme d'une entretoise, de préférence en matière plastique moulée d'une seule pièce, présentant deux pattes de pré-maintien 72 et une vis de fixation 8, de préférence en matériau tendre pré-montée sur les pattes 72.

## Revendications

1. Véhicule automobile comprenant un élément d'équipement intérieur (3) de véhicule et un élément de structure (2) de véhicule reliés l'un à l'autre par au moins un dispositif de support (7), le dispositif de support étant constitué d'une entretoise (7) dont une extrémité (7a) présente deux pattes (72) parallèles de pré-maintien, tandis que l'extrémité opposée (7b) de l'entretoise (7) présente des moyens de retenue (72) coopérant avec des moyens de retenue (31, 310) complémentaires ménagés sur l'élément d'équipement intérieur (3), **caractérisé en ce que** l'entretoise de support (7) est constituée d'un corps principal allongé (71) entre ces deux extrémités (7a et 7b), l'une (7a) des extrémités présentant deux pattes (72) en saillie parallèles l'une à l'autre, l'élément de structure (2) comportant une partie de fixation (21) sur le bord de laquelle l'extrémité de pré-maintien (7a) est montée à chevauchement et l'autre extrémité présentant une partie plus large que le corps principal (71) formant ainsi une extrémité (7b) en forme de T.

2. Véhicule selon la revendication 1, **caractérisé en ce que** l'extrémité de pré-maintien (7a) de l'entretoise (7) comporte en outre un moyen de fixation (8) permettant de fixer l'entretoise (7) sur la partie de fixation (21) de l'élément de structure (2), le moyen de fixation étant constitué d'une vis (8), engageable dans des alésages filetés (721, 722) ménagés dans chacune des pattes (72) de pré-maintien.

3. Véhicule selon l'une des revendications 1 et 2, **caractérisé en ce que** l'élément de structure est constitué par une traverse de baie inférieure (2) et l'élément d'équipement intérieur est constitué d'une planche de bord (3).

4. Véhicule selon la revendication 3, **caractérisé en ce que** les moyens de retenue ménagés sur la planche de bord (3) sont constitués d'une patte (31) s'étendant en saillie de la face inférieure de la planche de bord (3) et ménageant entre elle et la planche de bord (31), un logement de réception (310) dans lequel s'engagent les moyens de retenue ménagés à l'extrémité (7b) de l'entretoise (7).

5. Véhicule selon l'une des revendications 1 à 4, **caractérisé en ce que** le dispositif de support présente des zones frangibles.

6. Dispositif de support pour relier un élément d'équipement intérieur et un élément de structure d'un véhicule automobile, **caractérisé en ce qu'**il comprend un corps principal (71) dont une extrémité (7b) présente une forme en T et dont l'autre extrémité (7a) présente dans le prolongement du corps (71) des pattes (72) parallèles entre elles, chaque patte (72) présentant un alésage traversant fileté (721, 722), une vis de fixation (8) étant engageable dans les deux alésages reliant les pattes (72).

7. Dispositif de support selon la revendication 6, **caractérisé en ce que** le corps principal est frangible et présente au moins une lumière (74).

8. Procédé de montage d'un dispositif de support sur un véhicule selon l'une des revendications 6 et 7, **caractérisé en ce qu'**il consiste à monter la planche de bord (3) entre les pieds avant (PA) du véhicule puis le dispositif de support (7) de planche de bord (3) depuis le compartiment moteur et avant le pare-brise (6), en positionnant le dispositif (7) à une position adjacente à la plaque de fixation (21) prévue sur la traverse inférieure de baie (2) puis en faisant coulisser latéralement le dispositif de support (7) jusqu'à ce que les pattes de pré-maintien (72) se trouvent sur la partie de fixation (21) et l'extrémité opposée (7b) engagée dans le logement de réception (310), le dispositif (7) étant ensuite fixé en position par vissage.

9. Procédé de réparation d'un véhicule pourvu d'un dispositif de support selon l'une des revendications 6 et 7, **caractérisé en ce qu'**il consiste à retirer la planche de bord (3) puis le dispositif de support (7) défectueux à l'aide d'un outil approprié, à mettre en place depuis l'intérieur du véhicule un dispositif de support (7), à fixer ensuite ledit dispositif (7) par vissage depuis l'intérieur du véhicule et à remonter la planche de bord (3).

## Patentansprüche

1. Kraftfahrzeug, das ein Fahrzeuginnenausstattungselement (3) und ein Fahrzeugstrukturelement (2), die miteinander durch mindestens eine Tragvorrichtung (7) verbunden sind, umfasst, wobei die Tragvorrichtung aus einem Abstandhalter (7) besteht, von dem ein Ende (7a) zwei parallele Vorabhaltelaschen (72) aufweist, während das entgegengesetzte Ende (7b) des Abstandhalters (7) Rückhaltemittel (72) aufweist, die mit den komplementären Rückhaltemitteln (31, 310), die auf dem Innenausstattungselement (3) eingerichtet sind, zusammenwirken, **dadurch gekennzeichnet, dass** der Tragabstandhalter (7) aus einem länglichen Hauptkörper (71) zwischen diesen zwei Enden (7a und 7b) besteht, wobei eines (7a) der Enden zwei vorstehende Laschen (72) aufweist, die zueinander parallel sind, wobei das Strukturelement (2) einen Befestigungsteil (21) umfasst, auf dessen Rand das Vorabhalteende (7a) überlagernd montiert ist, und das andere Ende einen Teil aufweist, der breiter ist als der Hauptkörper (71), so dass ein Ende (7b) in T-Form gebildet wird.

2. Fahrzeug nach Anspruch 1, **dadurch gekennzeichnet, dass** das Vorabhalteende (7a) des Abstandhalters (7) außerdem ein Befestigungsmittel (8) umfasst, das es erlaubt, den Abstandhalter (7) auf dem Befestigungsteil (21) des Strukturelements (2) zu befestigen, wobei das Befestigungselement aus einer Schraube (8) besteht, die in Innengewindebohrungen (721, 722), die in jeder der Vorabhaltelaschen (72) eingerichtet sind, einfügbar ist.

3. Fahrzeug nach einem der Ansprüche 1 und 2, **dadurch gekennzeichnet, dass** das Strukturelement aus einem unteren Öffnungsquerträger (2) besteht, und das Innenausstattungselement aus einem Armaturenbrett (3) besteht.

4. Fahrzeug nach Anspruch 3, **dadurch gekennzeichnet, dass** die Rückhaltemittel, die auf dem Armaturenbrett (3) eingerichtet sind, aus einer Lasche (31) bestehen, die sich von der Innenfläche des Armaturenbretts (3) vorragend erstreckt und zwischen ihr und dem Armaturenbrett (31) eine Empfangsaufnahme (310) bildet, in der die Rückhaltemittel, die an dem Ende (7b) des Abstandhalters (7) eingerichtet sind, eingreifen.

5. Fahrzeug nach einem der Ansprüche 1 bis 4, **dadurch gekennzeichnet, dass** die Tragvorrichtung splitterbare Zonen aufweist.

6. Tragvorrichtung zum Verbinden eines Innenausstattungselements und eines Strukturelements eines Kraftfahrzeugs, **dadurch gekennzeichnet, dass** sie einen Hauptkörper (71) umfasst, von dem ein Ende (7b) eine T-Form aufweist, und von dem das andere Ende (7a) in der Verlängerung des Körpers (71) Laschen (72), die zueinander parallel sind, aufweist, wobei jede Lasche (72) eine durchgehende Innengewindebohrung (721, 722) aufweist, wobei eine Befestigungsschraube (8) in die zwei Bohrungen, die die Laschen (72) verbinden, einfügbar ist.

7. Tragvorrichtung nach Anspruch 6, **dadurch gekennzeichnet, dass** der Hauptkörper splitterbar ist und mindestens ein Langloch (74) aufweist.

8. Verfahren zur Montage einer Tragvorrichtung auf einem Fahrzeug nach einem der Ansprüche 6 und 7, **dadurch gekennzeichnet, dass** es darin besteht, das Armaturenbrett (3) zwischen den Vorderbeinen (PA) des Fahrzeugs, dann die Tragvorrichtung (7) des Armaturenbretts (3) von dem Motorraum und der Vorderseite der Windschutzscheibe (6) ausgehend zu montieren, indem die Vorrichtung (7) in einer Position benachbart zu der Befestigungsplatte (21), die auf dem unteren Öffnungsquerträger (2) vorgesehen ist, positioniert wird, dann durch seitliches Schieben der Tragvorrichtung (7), bis sich die Vorabhaltelaschen (72) auf dem Befestigungsteil (21) befinden und das entgegengesetzte Ende (7b) in die Empfangsaufnahme (310) eingefügt ist, wobei die Vorrichtung (7) anschließend durch Schrauben in Position befestigt wird.

9. Reparaturverfahren eines Fahrzeugs, das mit einer Tragvorrichtung nach einem der Ansprüche 6 und 7 versehen ist, **dadurch gekennzeichnet, dass** es darin besteht, das Armaturenbrett (3), dann die defekte Tragvorrichtung (7) mit Hilfe eines entsprechenden Werkzeugs zu entfernen, von dem Inneren des Fahrzeugs her eine Tragvorrichtung (7) zu platzieren und anschließend die Vorrichtung (7) durch Schrauben ausgehend von dem Inneren des Fahrzeugs zu befestigen und das Armaturenbrett (3) wieder zu montieren.

## Claims

1. Motor vehicle comprising an inner equipment vehicle element (3) and a structural vehicle element (2) connected to one another by at least one support device (7), the support device being constituted of a spacer (7) of which an end (7a) has two parallel pre-maintaining lugs (72), while the opposite end (7b) of the spacer (7) has retaining means (72) engaging with complementary retaining means (31, 310) arranged on the inner equipment element (3), **characterised in that** the support spacer (7) is constituted of an extended main body (71) between these two ends (7a and 7b), one (7a) of the ends having two protruding lugs (72) parallel to one another, the structural element (2) comprising an attachment portion (21) on the edge of which the pre-maintaining end (7a) is mounted overlapping, and the other end having a portion wider than the main body (71) thus forming a T-shaped end (7b).

2. Vehicle according to claim 1, **characterised in that** the pre-maintaining end (7a) of the spacer (7) further comprises an attachment means (8) making it possible to attach the spacer (7) on the attachment portion (21) of the structural element (2), the attachment means being constituted of a screw (8), which can be engaged in threaded bores (721, 722) arranged in each of the pre-maintaining lugs (72).

3. Vehicle according to one of claims 1 and 2, **characterised in that** the structural element is constituted by a lower rack cross member (2) and the inner equipment element is constituted of a dashboard (3).

4. Vehicle according to claim 3, **characterised in that** the retaining means arranged on the dashboard (3) are constituted of a lug (31) extending protruding from the lower face of the dashboard (3) and arranging between it and the dashboard (31), a receiving housing (310) wherein the retaining means arranged at the end (7b) of the spacer (7) are engaged.

5. Vehicle according to one of claims 1 to 4, **characterised in that** the support device has frangible zones.

6. Support device for connecting an inner equipment element and a structural element of a motor vehicle, **characterised in that** it comprises a main body (71) of which an end (7b) has a T-shape and of which the other end (7a) has, in the extension of the body (71) of the lugs (72) parallel to one another, each lug (72) having a threaded through bore (721, 722), an attachment screw (8) being able to be engaged in the two bores connecting the lugs (72).

7. Support device according to claim 6, **characterised in that** the main body is frangible and has at least one space (74).

8. Method for mounting a support device on a vehicle according to one of claims 6 and 7, **characterised in that** it consists of mounting the dashboard (3) between the front feet (PA) of the vehicle then the device for supporting (7) the dashboard (3) from the engine compartment and in front of the windscreen (6), by positioning the device (7) at a position adjacent to the attachment plate (21) provided on the lower rack cross member (2) then by making the support device (7) slide laterally until the pre-maintaining lugs (72) are located on the attachment portion (21) and the opposite end (7b) engaged in the receiving housing (310), the device (7) then being attached in position by screwing.

9. Method for repairing a vehicle provided with a support device according to one of claims 6 and 7, **characterised in that** it consists of removing the dashboard (3) then the faulty support device (7) using a suitable tool, to implement from the inside of the vehicle, a support device (7), to then attach said device (7) by screwing from the inside of the vehicle and to re-mounting the dashboard (3).
